# EUROPEAN PATENT APPLICATION

(11) **EP 4 207 879 A1**
(43) Date of publication of application: **05.07.2023**
(21) Application number: 20955833.7
(22) Date of filing: 30.09.2020
(51) Int. Cl.: H04W 48/16

(54) **CELL SEARCH METHOD APPLIED TO TERMINAL, AND COMMUNICATION APPARATUS**

(71) Applicant: Huawei Technologies Co., Ltd., Shenzhen, Guangdong 518129 (CN)
(72) Inventor: HE, Xiaoxu, Shenzhen, Guangdong 518129 (CN); YANG, Fan, Shenzhen, Guangdong 518129 (CN); FENG, Kun, Shenzhen, Guangdong 518129 (CN)
(74) Representative: Thun, Clemens
(86) International application number: PCT/CN2020/119744
(87) International publication number: WO 2022/067813

(57) **Abstract**

A cell search method applied to a terminal, and a communication apparatus are provided, for reducing duration for a terminal to search for a cell, thereby improving user experience. In the method, on a band scanning stage of cell search, the terminal obtains one or more bands corresponding to a PLMN and a frequency search range corresponding to each band in the one or more bands, where a quantity of frequencies in the frequency search range corresponding to each band is less than a quantity of all frequencies on each band; and the terminal searches, according to the frequency search range corresponding to each band, whether there is a suitable cell, and attempts to camp on the found suitable cell.

## Description

### TECHNICAL FIELD

This application relates to the field of wireless communication technologies, and in particular, to a cell search method applied to a terminal, and a communication apparatus.

### BACKGROUND

In a mobile communication system, a band may be used for defining a frequency search range of a radio wave. In communication systems of a same standard, for example, a long term evolution (LTE) communication system or a new radio (NR) communication system, a frequency search range defined by a band is fixed, and a band may be configured for at least one operator. The frequency search range that can be used by each operator may also be different. For example, in an LTE communication system, a frequency search range defined by band 40 is [2300 MHz, 2400 MHz], where a frequency search range [2300 MHz, 2320 MHz] is configured for China Unicom, a frequency search range [2320 MHz, 2370 MHz] is configured for China Mobile, a frequency search range [2370 MHz, 2390 MHz] is configured for China Telecom, and a frequency search range [2390 MHz, 2400 MHz] is of a reserved frequency.

After a terminal is powered on, the terminal needs to search for a suitable cell as soon as possible and camps on the cell. A process from initiating cell search to camping on a suitable cell may be referred to as a cell search process of the terminal. In the process, if the terminal does not store prior information or does not find a suitable cell according to prior information, the terminal needs to sequentially scan at least one band supported by the terminal until a suitable cell is found. For a single band, the terminal needs to search for all the frequency search ranges defined by the band, which takes a long time and affects user experience.

### SUMMARY

Embodiments of this application provide a cell search method applied to a terminal, and a communication apparatus, to reduce duration of searching for a cell by the terminal.

According to a first aspect, an embodiment of this application provides a cell search method applied to a terminal. The method may be performed by the terminal, or may be performed by a component (such as a processor, a chip, or a chip system) of the terminal. In the method, on a band scanning stage of cell search, the terminal obtains one or more bands corresponding to a public land mobile network (PLMN) and a frequency search range corresponding to each band in the one or more bands, where a quantity of frequencies in the frequency search range corresponding to each band is less than a quantity of all frequencies on each band; and the terminal searches, according to the frequency search range corresponding to each band, whether there is a suitable cell, and attempts to camp on the found suitable cell.

The PLMN corresponds to one or more bands. For example, when the PLMN corresponds to one band, the band may be a part of bands supported by an operator corresponding to the PLMN. For example, when the PLMN corresponds to more bands, the bands may be some or all bands supported by an operator corresponding to the PLMN. The operator corresponding to the PLMN may be determined by a mobile network code (MNC) in the PLMN.

In the prior art, on a band scanning stage of cell search, a terminal needs to scan all frequencies on a band supported by the terminal, that is, scan a full band. In the foregoing technical solution, the terminal searches for a suitable cell in a frequency search range corresponding to each of one or more bands corresponding to the PLMN, where a quantity of frequencies in the frequency search range corresponding to each band is less than a quantity of all frequencies on each band. That is, for a single band, the terminal scans some frequencies of the band. Compared with the prior art in which all frequencies of the band need to be scanned, duration of scanning a single band by the terminal can be reduced. When a plurality of bands need to be scanned, the foregoing technical solution can shorten overall duration of scanning the bands by the terminal, thereby reducing duration of searching for a cell by the terminal, and improving user experience.

In a possible design, the frequencies in the frequency search range corresponding to each band include some or all frequencies filtered based on one or more pieces of the following prior data information: commercial frequency information of an operator corresponding to the PLMN, and terminal camping frequency statistics information corresponding to the PLMN.

Optionally, the frequencies in the frequency search range corresponding to each band may be some or all frequencies filtered by a cloud server based on one or more pieces of prior data information, or may be some or all frequencies filtered by the terminal based on one or more pieces of prior data information. For example, the cloud server may be a base station of the operator, or may be a server maintained by the operator, or may be a server maintained by a terminal manufacturer. This is not limited in this application.

In the design, to improve a good service for the terminal, frequencies (or a band supported by the operator) used by the operator include frequencies (or a band) supported by the terminal. Frequencies in a frequency search range corresponding to a band are determined by commercial frequency information (for example, all frequencies supported by the operator) of the operator, which can shorten duration of cell search, ensure that the terminal can find a suitable cell in the frequency search range corresponding to the band, and avoid a problem that a suitable cell is missing because the terminal scans some frequencies of the band. The terminal camping frequency statistics information may be obtained from big data, and can indicate information about frequencies on which the terminal has camped. Therefore, filtering a frequency search range corresponding to a band from the terminal camping frequency statistics information can also shorten duration of cell search, ensure that the terminal can find a suitable cell in the frequency search range corresponding to the band, and avoid a problem that a suitable cell is missing because the terminal scans some frequencies of the band.

In a possible design, the frequency search range corresponding to each band is stored in the terminal by using the PLMN as an index.

Through the design, the terminal may determine a frequency search range corresponding to each of one or more bands corresponding to the PLMN according to the selected PLMN after entering the band scanning stage, and search for a cell according to the frequency search range corresponding to each band. A storage form may include a table, a text, a database, a picture, or the like.

In a possible design, the method may further include: The terminal receives network data from the cloud server, where the network data is used for initializing or updating the frequency search range corresponding to each band in the terminal.

According to the design, the terminal may update or initialize, according to the received network data, the frequency search range corresponding to each band in the terminal, which may be compatible with a case in which the terminal is not configured with the frequency search range corresponding to the band, and avoid a case in which the frequency search range corresponding to the band is unavailable because the network side is upgraded (for example, a PLMN, a band, or a frequency is added) and the terminal is not upgraded.

In a possible design, the network data of the cloud server includes one or more of the following data information: data information of one or more bands corresponding to the PLMN, data information of a frequency search range corresponding to each of one or more bands, and one or more pieces of prior data information.

Through the design, when the network data includes data information of one or more bands corresponding to the PLMN, the terminal may upgrade the frequency search range corresponding to each band in the terminal according to the network data. Alternatively, when the network data includes data information of a frequency search range corresponding to each of the one or more bands, the terminal may initialize the frequency search range corresponding to each band. Alternatively, when the network data includes one or more pieces of prior data information, the terminal may determine the frequency search range corresponding to each band according to the one or more pieces of prior data information, and store the frequency search range corresponding to each band by using the PLMN as an index.

In a possible design, the one or more bands corresponding to the PLMN include a band of a new radio NR system. For example, the one or more bands corresponding to the PLMN may include a band of an NR system, a band of an LTE system, or a band of another system. This is not limited in this embodiment of this application.

According to a second aspect, an embodiment of this application provides a cell search method applied to a terminal. The method may be performed by a cloud server, or may be performed by a component (such as a processor, a chip, or a chip system) of a cloud server. The cloud server determines network data, where the network data is used for initializing or updating a frequency search range corresponding to each band in the terminal, and a quantity of frequencies in the frequency search range corresponding to each band is less than a quantity of all frequencies on each band; and the cloud server sends the network data to the terminal.

In a possible design, the network data includes one or more of the following data information: data information of one or more bands corresponding to the PLMN, data information of a frequency search range corresponding to each of the one or more bands, and the one or more pieces of prior data information.

In a possible design, when the network data includes data information of a frequency search range corresponding to each of the one or more bands, the method may further include: The cloud server determines one or more pieces of prior data information, and determines data information of the frequency search range corresponding to each of the one or more bands according to the one or more pieces of prior data information.

In a possible design, the frequencies in the frequency search range corresponding to each band include some or all frequencies filtered based on one or more pieces of the following prior data information: commercial frequency information of an operator, and terminal camping frequency statistics information.

According to a third aspect, an embodiment of this application provides a communication apparatus. The communication apparatus may be a terminal, or may be an apparatus in a terminal. The communication apparatus may include a processing module and a cell search module. The modules may perform corresponding functions performed by the terminal in any design example of the first aspect.

The processing module may be configured to obtain, on a band scanning stage of cell search, one or more bands corresponding to a PLMN and a frequency search range corresponding to each band in the one or more bands, where a quantity of frequencies in the frequency search range corresponding to each band is less than a quantity of all frequencies on each band.

The cell search module may be configured to search, according to the frequency search range corresponding to each band, whether there is a suitable cell, and attempt to camp on the found suitable cell.

The PLMN corresponds to one or more bands. For example, when the PLMN corresponds to one band, the band may be a part of bands supported by an operator corresponding to the PLMN. For example, when the PLMN corresponds to more bands, the bands may be some or all bands supported by an operator corresponding to the PLMN. The operator corresponding to the PLMN may be determined by an MNC in the PLMN.

In a possible design, the frequencies in the frequency search range corresponding to each band include some or all frequencies filtered based on one or more pieces of the following prior data information: commercial frequency information of an operator corresponding to the PLMN, and terminal camping frequency statistics information corresponding to the PLMN.

In a possible design, the frequency search range corresponding to each band is stored in the terminal by using the PLMN as an index.

In a possible design, the cell search module may be further configured to: receive network data from a cloud server, where the network data is used for initializing or updating the frequency search range corresponding to each band in the terminal.

In a possible design, the network data of the cloud server includes one or more of the following data information: data information of one or more bands corresponding to the PLMN, data information of a frequency search range corresponding to each of one or more bands, and one or more pieces of prior data information.

In a possible design, the one or more bands corresponding to the PLMN include a band of a new radio NR system. For example, the one or more bands corresponding to the PLMN may include a band of an NR system, a band of an LTE system, or a band of another system.

According to a fourth aspect, an embodiment of this application provides a communication apparatus. The communication apparatus may be a cloud server, or may be an apparatus in a cloud server. The communication apparatus may include a processing module and a transceiver module. The modules may perform corresponding functions performed by the cloud server in any design example of the second aspect.

The processing module may be configured to determine network data, where the network data is used for initializing or updating a frequency search range corresponding to each band in a terminal, and a quantity of frequencies in the frequency search range corresponding to each band is less than a quantity of all frequencies on each band.

The transceiver module may be configured to send the network data to the terminal.

In a possible design, the network data includes one or more of the following data information: data information of one or more bands corresponding to a PLMN, data information of a frequency search range corresponding to each of the one or more bands, and one or more pieces of prior data information.

In a possible design, the processing module is further configured to: determine one or more pieces of prior data information, and determine data information of the frequency search range corresponding to each of the one or more bands according to the one or more pieces of prior data information.

In a possible design, the frequencies in the frequency search range corresponding to each band include some or all frequencies filtered based on one or more pieces of the following prior data information: commercial frequency information of an operator, and terminal camping frequency statistics information.

According to a fifth aspect, an embodiment of this application provides a communication apparatus, including a logic circuit and an interface circuit.

The logic circuit may be configured to obtain one or more bands corresponding to a public land mobile network PLMN and a frequency search range corresponding to each of the one or more bands, and the communication apparatus is enabled to perform the method according to the first aspect or any implementation of the first aspect, where a quantity of frequencies in the frequency search range corresponding to each band is less than a quantity of all frequencies on each band.

The interface circuit may be configured to search, according to the frequency search range corresponding to each band, whether there is a suitable cell, and attempt to camp on the found suitable cell, where the frequencies in the frequency search range corresponding to each band include some frequencies filtered based on one or more pieces of the following prior data information:
commercial frequency information of an operator corresponding to the PLMN, and terminal camping frequency statistics information corresponding to the PLMN.

According to a sixth aspect, an embodiment of this application provides a communication apparatus, including a logic circuit and an interface circuit.

The logic circuit may be configured to determine network data, where the network data is used for initializing or updating a frequency search range corresponding to each band in a terminal, and the communication apparatus is enabled to perform the method according to the second aspect or any implementation of the second aspect, where a quantity of frequencies in the frequency search range corresponding to each band is less than a quantity of all frequencies on each band.

The interface circuit may be configured to send the network data to the terminal.

According to a seventh aspect, an embodiment of this application provides a communication apparatus, including: a memory, configured to store a program; and a processor, configured to execute the program stored in the memory. When the program is executed, the communication apparatus is enabled to perform the method according to the first aspect or any implementation of the first aspect. Optionally, the processor includes the memory. Optionally, the communication apparatus is a chip or an integrated circuit.

According to an eighth aspect, an embodiment of this application provides a communication apparatus, including: a memory, configured to store a program; and a processor, configured to execute the program stored in the memory. When the program is executed, the communication apparatus is enabled to perform the method according to the second aspect or any implementation of the second aspect. Optionally, the processor includes the memory. Optionally, the communication apparatus is a chip or an integrated circuit.

According to a ninth aspect, an embodiment of this application provides a computer-readable storage medium. The computer-readable storage medium stores computer-readable instructions, and when the computer-readable instructions are run on a communication apparatus, the communication apparatus is enabled to perform the method according to the first aspect or any implementation of the first aspect.

According to a tenth aspect, an embodiment of this application provides a computer-readable storage medium. The computer-readable storage medium stores computer-readable instructions, and when the computer-readable instructions are run on a communication apparatus, the communication apparatus is enabled to perform the method according to the second aspect or any implementation of the second aspect.

According to an eleventh aspect, an embodiment of this application provides a computer program product. When the computer program product runs on a communication apparatus, the communication apparatus is enabled to perform the method according to the first aspect or any implementation of the first aspect.

According to a twelfth aspect, an embodiment of this application provides a computer program product. When the computer program product runs on a communication apparatus, the communication apparatus is enabled to perform the method according to the second aspect or any implementation of the second aspect.

For beneficial effects of the second aspect to the twelfth aspect and the implementations thereof, refer to the descriptions of the beneficial effects in the first aspect and the implementations of the first aspect.

### BRIEF DESCRIPTION OF DRAWINGS

FIG. 1 is a schematic architectural diagram of a communication system to which embodiments of this application are applicable;
FIG. 2 is a schematic architectural diagram of a terminal according to an embodiment of this application;
FIG. 3 is a schematic flowchart of cell search by a terminal according to an embodiment of this application;
FIG. 4 is a schematic flowchart of a cell search method applied to a terminal according to an embodiment of this application;
FIG. 5 is a schematic flowchart of a method for determining a frequency search range corresponding to a band according to an embodiment of this application;
FIG. 6 is a schematic diagram of interaction between a cloud communication module and a modem according to an embodiment of this application;
FIG. 7 is a schematic flowchart of another method for determining a frequency search range corresponding to a band according to an embodiment of this application;
FIG. 8 is a schematic diagram of a third frequency search range according to an embodiment of this application;
FIG. 9 is another schematic diagram of a third frequency search range according to an embodiment of this application;
FIG. 10 is a schematic diagram of a cell search method applied to a terminal according to an embodiment of this application;
FIG. 11 is a schematic flowchart of another cell search method applied to a terminal according to an embodiment of this application;
FIG. 12 is a schematic diagram of a structure of a communication apparatus according to an embodiment of this application;
FIG. 13 is a schematic diagram of another structure of a communication apparatus according to an embodiment of this application; and
FIG. 14 is a schematic diagram of still another structure of a communication apparatus according to an embodiment of this application.

### DESCRIPTION OF EMBODIMENTS

To make the objectives, technical solutions, and advantages of this application clearer, the following further describes this application in detail with reference to the accompanying drawings. A specific operation method in a method embodiment may also be applied to an apparatus embodiment or a system embodiment. In the descriptions of this application, unless otherwise specified, "a plurality of" means two or more than two.

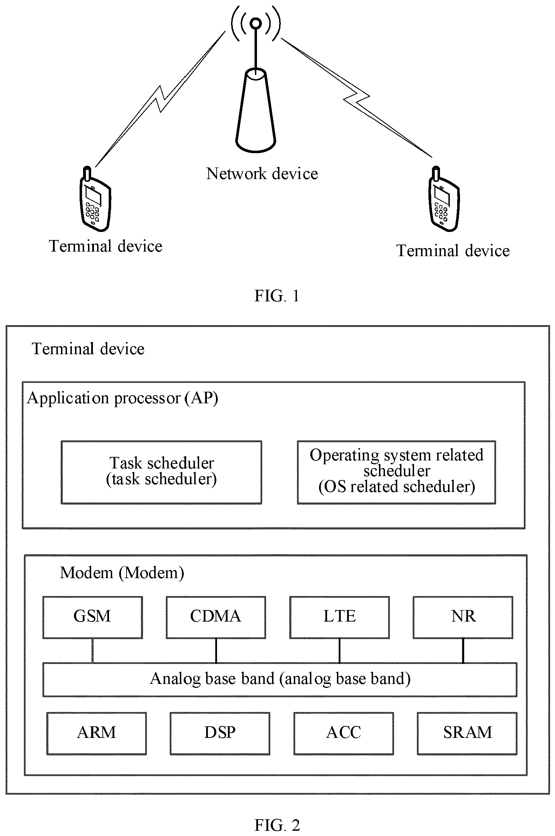

FIG. 1 is a schematic diagram of a possible network architecture to which this application is applicable. The network architecture includes a network device and at least one terminal. The network device and the terminal may work on an NR communication system. The terminal may communicate with the network device through a fifth generation (5G) NR communication system. The network device and the terminal may alternatively work on another communication system. This is not limited in this embodiment of this application.

The network device may be a device in a wireless network, for example, a radio access network (RAN) node that connects the terminal to the wireless network. Currently, for example, the RAN node is a gNB, a transmission reception point (TRP), an evolved NodeB (eNB), a radio network controller (RNC), a NodeB (NB), a base station controller (BSC), a base transceiver station (BTS), a home base station (for example, home evolved NodeB, or home NodeB, HNB), a base band unit (BBU), or a wireless fidelity (Wi-Fi) access point (AP). In a network structure, the network device may include a central unit (CU) node, or a distributed unit (DU) node, or a RAN device including a CU node and a DU node. Optionally, the network device may be a server, for example, a single server, a server cluster, or a cloud server. In embodiments of this application, an apparatus that implements a function of the network device may be a network device, or may be an apparatus that supports the network device to implement the function, such as a chip, a circuit, or another apparatus.

The terminal may also be referred to as a terminal device, user equipment (UE), a mobile station (MS), a mobile terminal (MT), or the like, and is a device that provides voice/data connectivity for a user, for example, a hand-held device with a wireless connection function or an in-vehicle device. Currently, some examples of the terminal are: a mobile phone, a tablet computer, a notebook computer, a palmtop computer, a mobile internet device (MID), a wearable device, a virtual reality (VR) device, an augmented reality (AR) device, a wireless terminal in industrial control, a wireless terminal in self driving, a wireless terminal in a remote medical surgery, a wireless terminal in a smart grid, a wireless terminal in transportation safety, a wireless terminal in a smart city, or a wireless terminal in a smart home. In embodiments of this application, an apparatus that implements a function of the terminal may be a terminal, or may be an apparatus that supports the terminal to implement the function, such as a chip, a circuit, or another apparatus.

As an example, a structure of the terminal may be shown in FIG. 2. As shown in FIG. 2, the terminal may include an application processor (AP) and a modem.

For example, the AP may be configured to execute an operating system (OS), a user interface, an application program, or the like. For example, the AP may include a task scheduler, configured to schedule execution of a task such as a user program or an application program. For example, the AP may include an operating system related scheduler, configured to schedule execution of an OS related task.

For example, the modem may convert a digital signal into an analog signal, and convert an analog signal into a digital signal, to complete communication between two devices. For example, the modem performs digital-to-analog conversion on a signal such as a global system for mobile communications (GSM) signal, a code division multiple access (CDMA) signal, an LTE signal, or an NR signal. For example, the modem may include an advanced reduced instruction set computing machine (ARM), configured to process a digital/analog signal to complete modulation and demodulation. For example, the modem may include a digital signal processor (DSP), configured to process a digital signal. For example, the modem may include a static random access memory (SRAM), configured to store data and/or computer instructions and the like. For example, the modem may include an advanced clock calibrator (ACC), configured to correct a clock frequency and an operation error.

It should be noted that quantities and types of network devices and terminals included in the communication system shown in FIG. 1 are merely an example, and embodiments of this application are not limited thereto. For example, the communication system to which embodiments of this application are applied may further include more network devices, or include more terminals that can communicate with network devices, which are not shown one by one in the accompanying drawings for brevity. In addition, in the communication system shown in FIG. 1, although the network device and the terminal are shown, the communication system may include but is not limited to the network device and the terminal. For example, the communication system may further include a core network device or a device configured to carry a virtualized network function. This is obvious to a person of ordinary skill in the art, and details are not described herein.

The term "and/or" in embodiments of this application describes only an association relationship for describing associated objects and represents that three relationships may exist. For example, A and/or B may represent the following three cases: only A exists, both A and B exist, and only B exists. In addition, the character "/" in this specification generally indicates an "or" relationship between the associated objects.

Unless otherwise stated, ordinal numerals such as "first", "second", "third", and "fourth" mentioned in embodiments of this application are used to differentiate between a plurality of objects, but not used to limit an order, a time sequence, a priority, or an importance degree of the plurality of objects.

In addition, the word "example" in embodiments of this application is used to represent giving an example, an illustration, or a description. Any embodiment or design scheme described as an "example" in embodiments of this application should not be explained as being more preferred or having more advantages than another embodiment or design scheme. Exactly, the word "example" is used to present a concept in a specific manner.

The following describes technical features in embodiments of this application.

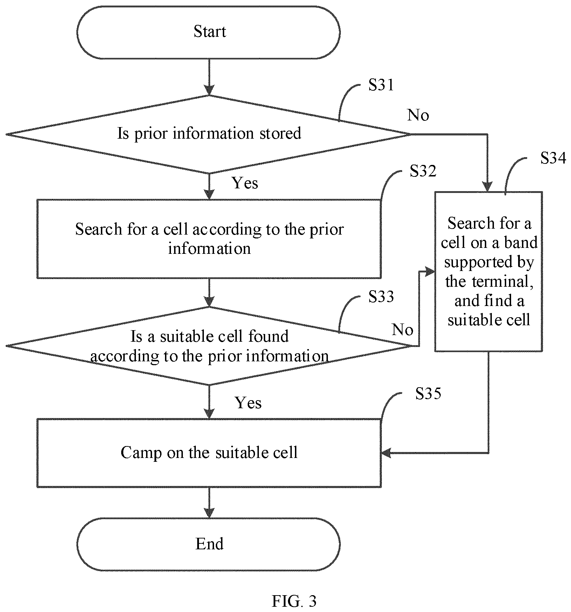

In a mobile communication system, after a terminal is powered on, the terminal needs to search for a suitable cell as soon as possible and camps on the cell. A process from initiating cell search to camping on a suitable cell may be referred to as a cell search process of the terminal. Details are shown in FIG. 3. As shown in FIG. 3, the process may include the following steps.

S31. A terminal determines whether prior information is stored. If the terminal determines that prior information is stored, the terminal performs step S32. If the terminal determines that prior information is not stored, the terminal enters a band scanning stage, that is, the terminal performs step S34.

For example, the terminal may determine, by reading a subscriber identity module (SIM) card, whether prior information is stored. The prior information may include at least one frequency, and the at least one frequency may be a frequency of a cell on which the terminal has camped, for example, a frequency of a cell on which the terminal has camped before the terminal is powered off.

S32. The terminal searches for a cell according to the prior information.

For example, the terminal may sequentially search for a cell on the at least one frequency.

S33. The terminal determines whether a suitable cell is found according to the prior information. If the terminal determines that no suitable cell is found according to the prior information, the terminal enters a band scanning stage, that is, the terminal performs step S34. If the terminal determines that a suitable cell is found according to the prior information, the terminal performs step S35.

S34. The terminal searches for a cell on at least one band supported by the terminal, and finds a suitable cell.

For example, the terminal may sequentially scan bands supported by the terminal to obtain a plurality of frequencies, and then sequentially search for and attempt to camp on the plurality of frequencies obtained by scanning until a suitable cell is found. For example, the bands supported by the terminal are band 1 and band 2, the frequency search range defined by band 1 is frequency search range 1, and the frequency search range defined by band 2 is frequency search range 2. The terminal sequentially scans frequency search range 1 and frequency search range 2 to obtain frequency 1, frequency 2, and frequency 3. The terminal sequentially searches for cells on frequency 1, frequency 2, and frequency 3. For example, the terminal first searches for cells on frequency 1 but does not find any suitable cell, then the terminal searches for cells on frequency 2 and finds a suitable cell, and the terminal ends the search and attempts to camp on the suitable cell, that is, the terminal does not need to search for cells on frequency 3.

S35. The terminal camps on the suitable cell.

For example, the terminal may be synchronized with the suitable cell in terms of frequency and time by receiving a primary synchronization signal/secondary synchronization signal physical broadcast channel (SSB), and obtain broadcast information and network side registration of the suitable cell, to camp on the suitable cell.

So far, the cell search process of the terminal ends.

In an NR communication system, a sending period of an SSB in the NR communication system is 20 milliseconds (ms), and a sending period of an SSB in another system (for example, a second generation mobile communication system, a third generation mobile communication system, or a fourth generation mobile communication system) is less than 20 ms. In addition, a bandwidth of a band supported by NR is wider than that in the another system. This means that, compared with the another system, time required for the terminal to synchronize with a cell and time required for searching for an entire band in the NR communication system are longer. That is, time required by the terminal to search for a cell in the NR communication system is longer than time required by the terminal to search for a cell in the another system, affecting user experience.

In view of this, embodiments of this application provide a cell search method applied to a terminal, to reduce duration of searching for a cell by the terminal, and improve user experience.

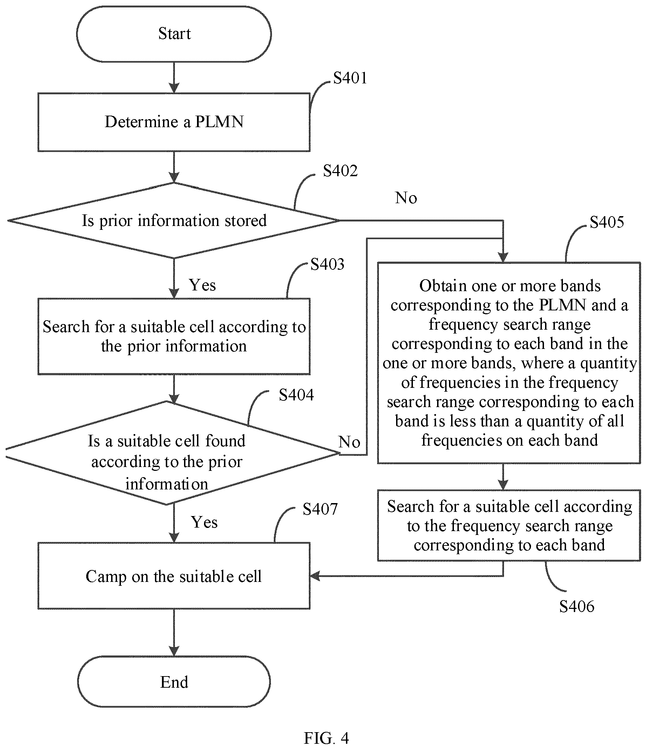

Refer to FIG. 4. FIG. 4 is a schematic flowchart of a cell search method applied to a terminal according to an embodiment of this application. The method may be applied to the communication system 100 shown in FIG. 1. The terminal in this embodiment of this application may be the terminal shown in FIG. 1. It may be understood that, in this embodiment of this application, steps performed by the terminal may alternatively be performed by a module or a component of the terminal, for example, may be performed by a chip or a chip system in the terminal. As shown in FIG. 4, the method may include the following steps.

S401. The terminal determines a PLMN.

For example, after the terminal is powered on, the terminal may determine a PLMN. For example, when the terminal is roaming, the terminal may determine a PLMN. For example, when the terminal is in a scenario with weak network coverage, such as a basement, an elevator, or a tunnel, the terminal may determine a PLMN. For another example, network deployment is insufficient at an initial stage of standalone (SA) construction, and the terminal may determine a PLMN. A scenario in which the terminal is triggered to determine a PLMN is not limited in this application.

For example, the terminal may determine a PLMN. The PLMN may correspond to one or more bands. For example, PLMN 1 corresponds to band 1, and PLMN 2 corresponds to band 2 and band 3. The one or more bands may be some or all of the bands supported by an operator corresponding to the PLMN. For example, the operator corresponding to the PLMN supports three bands: band 1, band 2, and band 3, where band 1 may be configured for PLMN 1, and band 2 and band 3 may be configured for PLMN 2. The operator corresponding to the PLMN may serve the terminal. For example, an MNC in the PLMN may be used for determining the operator corresponding to the PLMN. For example, the MNC in the PLMN is 00, and the operator corresponding to the PLMN may be China Mobile. For another example, the MNC in the PLMN is 01, and the operator corresponding to the PLMN may be China Unicom. One or more operators may serve the terminal. This is not limited in this embodiment of this application.

For example, the terminal may determine a PLMN from a plurality of PLMNs maintained by the terminal. The plurality of PLMNs may be read from an SIM (or USIM) card, or may be stored locally, or may be read from an SIM (or USIM) card and stored locally. This is not limited in this embodiment of this application. For example, the PLMN determined by the terminal may be a PLMN with a highest priority among the plurality of PLMNs. For example, the terminal maintains a plurality of PLMNs and priorities of the plurality of PLMNs. The terminal may select a PLMN with a highest priority from the plurality of PLMNs to perform band scanning. The priorities of the plurality of PLMNs may be predefined, or may be configured by an operator, or may be configured by a network device. This is not limited in this embodiment of this application.

As an example, the PLMN may correspond to one or more bands, and a frequency search range corresponding to each of the one or more bands. For example, the frequency search range corresponding to each band may be stored in the terminal by using the PLMN as an index, so that the terminal can determine one or more bands and a frequency search range corresponding to each of the one or more bands according to the PLMN. A quantity of frequencies in the frequency search range corresponding to each band is less than a quantity of all frequencies on each band. A quantity of all frequencies on a band may refer to a quantity of frequencies in a frequency search range defined by the band. For example, a frequency search range defined by band 40 is [2300 MHz, 2400 MHz], and a frequency search range corresponding to band 40 may be [2320 MHz, 2380 MHz]. The frequency search range corresponding to each band may be continuous or discontinuous. This is not limited in this embodiment of this application. For example, customized frequency search ranges corresponding to band 40 may be [2320 MHz, 2340 MHz] and [2345 MHz, 2360 MHz]. The frequency search range defined by the band may refer to a frequency search range divided for the band in a communication protocol. It may be understood that, for a same band, frequency search ranges specified by different communication protocols for the band may be the same or different. This is not limited in this embodiment of this application.

As another example, the frequencies in the frequency search range corresponding to each band may include some or all frequencies filtered based on one or more pieces of the following prior data information: commercial frequency information of an operator corresponding to the PLMN, and terminal camping frequency statistics information corresponding to the PLMN. The commercial frequency information of the operator corresponding to the PLMN may include one or more frequencies used by the operator corresponding to the PLMN. The terminal camping frequency statistics information corresponding to the PLMN may include some or all frequencies of cells on which terminals that have registered the PLMN have camped. For example, a cloud server may filter, based on one or more pieces of prior data information, frequencies in a frequency search range corresponding to each band. The cloud server may be a server maintained by an operator, a server maintained by a terminal manufacturer, or a base station of an operator. This is not limited in this embodiment of this application. For another example, the terminal may filter, based on one or more pieces of prior data information, frequencies in a frequency search range corresponding to each band.

In another example, the cloud server may send network data to the terminal, and correspondingly the terminal may receive the network data from the cloud server, where the network data may be used for initializing or updating a frequency search range corresponding to each band inside the terminal. The network data may include one or more types of the following data information:
(1) Data information of one or more bands corresponding to the PLMN. For example, data information of one or more bands may include one or more bands newly added by an operator, one or more frequencies used by an operator on a newly added band, or one or more frequencies newly added by an operator on a band supported by the operator Correspondingly, the data information of one or more bands corresponding to the PLMN may include one or more bands newly added by the operator corresponding to the PLMN, one or more frequencies used by the operator corresponding to the PLMN on a newly added band, or one or more frequencies newly added by the operator corresponding to the PLMN on a band supported by the operator. For example, band 1 and band 2 are originally configured for operator 1, band 3 is now configured for operator 1, and the data information of one or more bands corresponding to the PLMN may include band 3 and one or more frequencies used by operator 1 in band 3. For another example, operator 1 supports band 1, originally uses only frequency 1 and frequency 2 in band 1, and now uses frequency 3 in band 1, and the data information of one or more bands corresponding to the PLMN may include frequency 2.
(2) Data information of a frequency search range corresponding to each of one or more bands. For example, data information of a frequency search range corresponding to each of one or more bands may include the frequency search range corresponding to each band. For example, the cloud server may filter frequencies in a frequency search range corresponding to each band according to one or more pieces of prior data information, to obtain the frequency search range corresponding to each band, and then send the frequency search range to the terminal.
(3) One or more pieces of prior data information. For example, the terminal receives one or more pieces of prior data information from the cloud server, and filters frequencies in a frequency search range corresponding to each band according to the one or more pieces of prior data information, to obtain the frequency search range corresponding to each band.

For example, if the network data includes data information of one or more bands corresponding to the PLMN, the terminal may update the frequency search range corresponding to each band according to the data information of the one or more bands corresponding to the PLMN after receiving the network data. For example, if the network data includes data information of one or more bands corresponding to the PLMN, the terminal may initialize the frequency search range corresponding to each band according to the data information of the one or more bands corresponding to the PLMN after receiving the network data. For another example, if the network data includes one or more pieces of prior data information, the terminal may initialize the frequency search range corresponding to each band according to the one or more pieces of prior data information after receiving the network data.

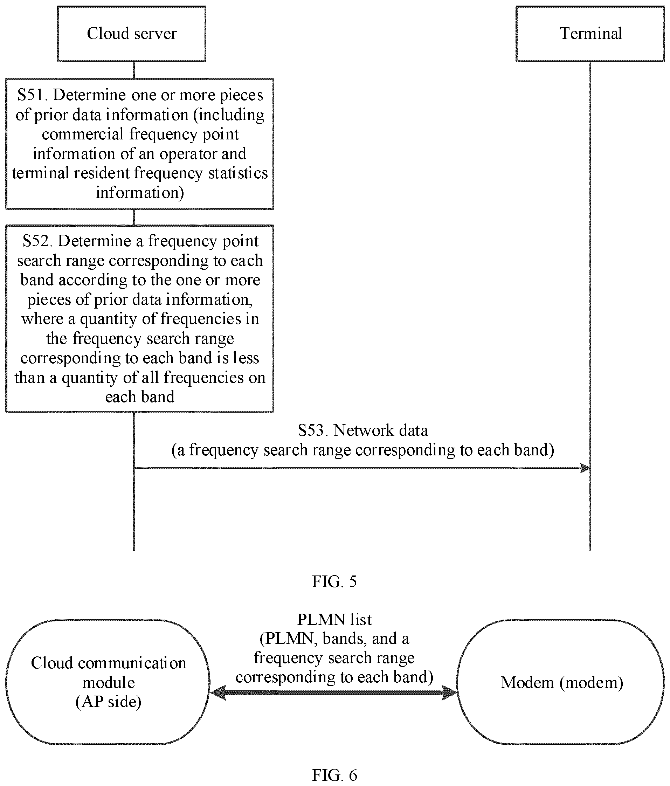

With reference to FIG. 5 to FIG. 7, the following describes a process of determining a frequency search range corresponding to each band.

FIG. 5 is a schematic flowchart of a method for determining a frequency search range corresponding to a band according to an embodiment of this application. The method may be applied to the communication system 100 shown in FIG. 1. A terminal in this embodiment of this application may be the terminal shown in FIG. 1. A cloud server in this embodiment of this application may be the network device shown in FIG. 1, or a server maintained by an operator, or a server maintained by a terminal manufacturer. It may be understood that, in this embodiment of this application, steps performed by the terminal may alternatively be performed by a module or a component of the terminal, for example, may be performed by a chip or a chip system in the terminal. Steps performed by the cloud server may alternatively be performed by a module or a component of the network device, for example, may be performed by a chip or a chip system in the network device. As shown in FIG. 5, the method may include the following steps.

S51. The cloud server determines one or more pieces of prior data information.

For example, the cloud server may determine one or more pieces of prior data information. One piece of prior data information may correspond to one operator. For example, the cloud server may obtain prior data information of operator 1, to obtain a piece of prior data information. For another example, the cloud server may separately obtain prior data information of operator 1 and operator 2, to obtain two pieces of prior data information.

For example, the prior data information may include commercial frequency information of an operator, or terminal camping frequency statistics information, or commercial frequency information of an operator and terminal camping frequency statistics information. For example, the commercial frequency information of the operator may include a band supported by the operator and a frequency used by the operator on the band. The terminal camping frequency statistics information may include some or all frequencies of cells on which terminals served by the same operator have camped.

As an example, the cloud server may determine commercial frequency information of an operator according to network deployment information of the operator. The network deployment information may include all or a part of information such as a name of a base station, a longitude and a latitude of a site, a band supported by a base station, or a frequency supported by a base station. For example, when the cloud server is a base station of the operator or a server maintained by the operator, the cloud server may determine the commercial frequency information of the operator by collecting the network deployment information of the operator.

As another example, the cloud server may determine the commercial frequency information of the operator by interacting with the operator. For example, when the cloud server is a server maintained by a terminal manufacturer, the cloud server may obtain the commercial frequency information of the operator by interacting with the operator, or an administrator may import the commercial frequency information of the operator to the cloud server. For another example, when the cloud server is a server maintained by a terminal manufacturer, the cloud server may obtain the network deployment information of the operator by interacting with the operator, and determine the commercial frequency information of the operator according to the network deployment information of the operator; or an administrator may import the network deployment information of the operator to the cloud server, and the cloud server may determine the commercial frequency information of the operator according to the imported network deployment information.

As another example, the cloud server may determine the terminal camping frequency statistics information through big data statistics. For example, the cloud server may determine, through big data statistics, frequencies of cells on which terminals served by the same operator have camped, and may determine the terminal camping frequency statistics information for different operators.

S52. The cloud server determines network data according to the one or more pieces of prior data information, where the network data includes a frequency search range corresponding to each band.

In this example, the network data includes a frequency search range corresponding to each band.

For example, the cloud server may determine the frequency search range corresponding to each band according to the commercial frequency information of the operator, the cloud server may determine the frequency search range corresponding to each band according to the terminal camping frequency statistics information, or the cloud server may determine the frequency search range corresponding to each band according to the commercial frequency information of the operator and the terminal camping frequency statistics information.

The following describes step S52 by using an example in which a frequency search range corresponding to a first band is determined.

As an example, the cloud server may filter frequencies in a frequency search range corresponding to a first band according to the commercial frequency information of the operator. For example, the commercial frequency information of the operator includes a plurality of frequencies, and the cloud server may use some of the plurality of frequencies as the frequencies in the frequency search range corresponding to the first band. The some frequencies may be frequencies having usage rates greater than a first threshold among the plurality of frequencies. The first threshold may be preset, or may be configured by a network side, or may be configured by an operator. This is not limited in this embodiment of this application. For another example, the commercial frequency information of the operator includes one or more frequencies, and the cloud server may use all of the one or more frequencies as the frequencies in the frequency search range corresponding to the first band. For example, after the cloud server determines that one or more frequencies in the commercial frequency information of the operator are used as the frequencies in the frequency search range corresponding to the first band, the cloud server may determine a first frequency and a second frequency according to the one or more frequencies. The first frequency may be a minimum frequency in the frequency search range corresponding to the first band, and the second frequency is a maximum frequency in the frequency search range corresponding to the first band.

For example, when the cloud server uses a plurality of frequencies in the commercial frequency information of the operator as the frequencies in the frequency search range corresponding to the first band, the first frequency may be less than or equal to a minimum frequency among plurality of frequencies corresponding to the plurality of frequencies and greater than a minimum frequency in the frequency search range defined by the first band, and the second frequency may be greater than or equal to a maximum frequency among the plurality of frequencies corresponding to the plurality of frequencies and less than a maximum frequency in the frequency search range defined by the first band. For another example, when the cloud server uses a frequency in the commercial frequency information of the operator as the frequency in the frequency search range corresponding to the first band, the first frequency may be less than or equal to a frequency corresponding to the frequency and greater than a minimum frequency in the frequency search range defined by the first band, and the second frequency may be greater than the frequency corresponding to the frequency and less than a maximum frequency in the frequency search range defined by the first band.

For example, a frequency search range defined by band 40 is [2300 MHz, 2400 MHz], and the cloud server determines to use frequency 1, frequency 2, and frequency 3 in the commercial frequency information of the operator as the frequencies in the frequency search range corresponding to the first band. A frequency corresponding to frequency 1 is 2330 MHz, a frequency corresponding to frequency 2 is 2335 MHz, and a frequency corresponding to frequency 3 is 2346 MHz. When customizing a frequency search range for band 40, the cloud server may determine that the first frequency is 2327 MHz and the second frequency is 2350 MHz, and the frequency search range customized by the cloud server for band 40 may be [2327 MHz, 2350 MHz].

As an example, the cloud server may filter the frequencies in the frequency search range corresponding to the first band according to the terminal camping frequency statistics information. For example, the terminal camping frequency statistics information includes a plurality of frequencies, and the cloud server may use some of the plurality of frequencies as the frequencies in the frequency search range corresponding to the first band. The some frequencies may be frequencies having usage rates greater than a second threshold among the plurality of frequencies. The second threshold may be preset, or may be configured by the network side, or may be configured by the operator. This is not limited in this embodiment of this application. For another example, the terminal camping frequency statistics information includes one or more frequencies, and the cloud server may use all of the one or more frequencies as the frequencies in the frequency search range corresponding to the first band. For example, after the cloud server determines that one or more frequencies in the terminal camping frequency statistics information are used as the frequencies in the frequency search range corresponding to the first band, the cloud server may determine a first frequency and a second frequency according to the one or more frequencies. The first frequency may be a minimum frequency in the frequency search range corresponding to the first band, and the second frequency is a maximum frequency in the frequency search range corresponding to the first band.

For example, a frequency search range defined by band 40 is [2300 MHz, 2400 MHz], and the terminal camping frequency statistics information may include frequency 4, frequency 5, and frequency 6. A frequency corresponding to frequency 4 is 2325 MHz, a frequency corresponding to frequency 5 is 2330 MHz, and a frequency corresponding to frequency 6 is 2333 MHz. When customizing a frequency search range for band 40 according to the terminal camping frequency statistics information, the cloud server may determine that the first frequency is 2325 MHz and the second frequency is 2335 MHz, and the frequency search range customized by the network device for band 40 may be [2325 MHz, 2335 MHz].

As another example, the cloud server may filter the frequencies in the frequency search range corresponding to the first band according to the commercial frequency information of the operator and the terminal camping frequency statistics information. For example, the cloud server may use some or all frequencies included in the commercial frequency information of the operator and some or all frequencies included in the terminal camping frequency statistics information as the frequencies in the frequency search range corresponding to the first band.

For example, a frequency search range defined by band 40 is [2300 MHz, 2400 MHz], the commercial frequency information of the operator may include frequency 1, frequency 2, and frequency 3, and the terminal camping frequency statistics information may include frequency 4, frequency 5, and frequency 6. A frequency corresponding to frequency 1 is 2330 MHz, a frequency corresponding to frequency 2 is 2335 MHz, a frequency corresponding to frequency 3 is 2346 MHz, a frequency corresponding to frequency 4 is 2325 MHz, a frequency corresponding to frequency 5 is 2330 MHz, and a frequency corresponding to frequency 6 is 2333 MHz. When customizing a frequency search range for band 40 according to the commercial frequency information of the operator and the terminal camping frequency statistics information, the network device may determine that the first frequency is 2325 MHz and the second frequency is 2350 MHz, and the frequency search range customized by the network device for band 40 may be [2325 MHz, 2350 MHz].

S53. The cloud server sends the network data to the terminal. Correspondingly, the terminal receives the network data.

For example, after receiving the network data, the terminal may store the frequency search range corresponding to each band by using the PLMN as an index. A storage form may be a table, a database, a text, a picture, or the like. This is not limited in this embodiment of this application. One PLMN may correspond to one or more bands, and one band may correspond to one or more frequency search ranges, as shown in Table 1. As shown in Table 1, PLMN 1 may be used for determining band 1, and a frequency search range corresponding to band 1 is [A 1, B1]; PLMN 2 may be used for determining band 2, and frequency search ranges corresponding to band 2 are [A2, B2] and [A3, B3]; and PLMN 3 may be used for determining band 1 and band 3, frequency search ranges corresponding to band 1 are [A4, B4] and [A5, B5], and a frequency search range corresponding to band 3 is [A6, B6].

**Table 1: PLMN list**

| PLMN | Band | Frequency search range |
|---|---|---|
| PLMN 1 | Band 1 | [A1, B1] |
| PLMN 2 | Band 2 | [A2, B2] |
| | | [A3, B3] |
| PLMN 3 | Band 1 | [A4, B4] |
| | | [A5, B5] |
| | Band 3 | [A6, B6] |

As an example, the PLMN list may be stored in an AP of the terminal, for example, stored in a cloud communication module of the AP, where the cloud communication module may be configured to enable the terminal to support cloud communication. After entering a band searching stage, the modem of the terminal may interact with the cloud communication module to obtain the PLMN list stored in the cloud communication module, as shown in FIG. 6. The modem may determine one or more bands corresponding to the PLMN and a frequency search range corresponding to each band in the one or more bands according to the selected PLMN and the PLMN list.

As another example, the PLMN list may be stored in an internal memory. After entering the band searching stage, the modem of the terminal may directly obtain the PLMN list from the internal memory, and determine one or more bands corresponding to the PLMN and a frequency search range corresponding to each band in the one or more bands according to the selected PLMN and the PLMN list.

In a possible implementation, the terminal may send a network data response message (for example, an acknowledgment message or a negative acknowledgment message) to the cloud server, to indicate whether the terminal has successfully received the network data. Correspondingly, the cloud server receives the network data response message. For example, after receiving the network data, the terminal may send an acknowledgment message to the cloud server, to indicate that the terminal has successfully received the network data.

So far, the terminal obtains and stores the frequency search range corresponding to each band.

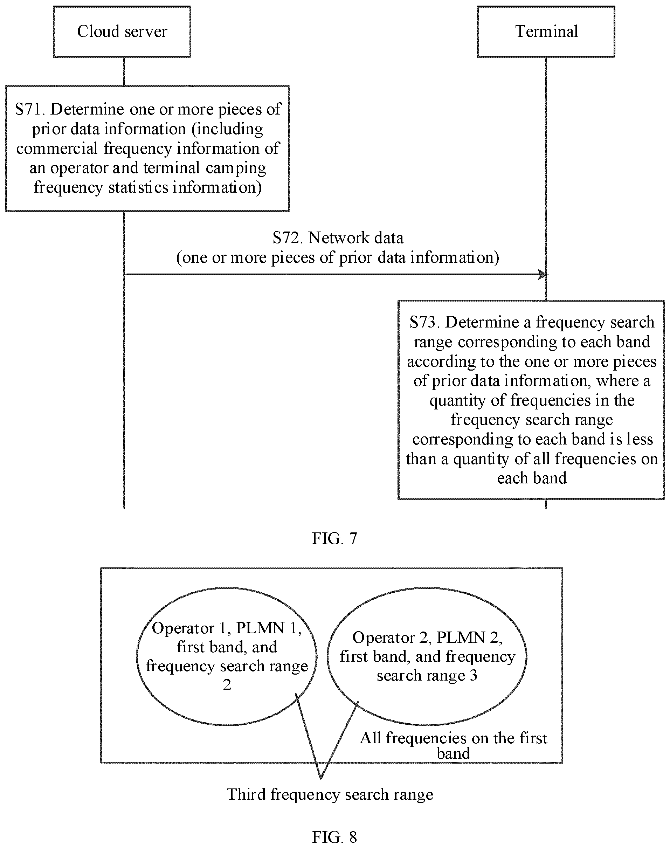

FIG. 7 is a schematic flowchart of a method for determining a frequency search range corresponding to a band according to an embodiment of this application. The method may be applied to the communication system 100 shown in FIG. 1. A terminal in this embodiment of this application may be the terminal shown in FIG. 1. A cloud server in this embodiment of this application may be the network device shown in FIG. 1, or a server maintained by an operator, or a server maintained by a terminal manufacturer. It may be understood that, in this embodiment of this application, steps performed by the terminal may alternatively be performed by a module or a component of the terminal, for example, may be performed by a chip or a chip system in the terminal. Steps performed by the cloud server may alternatively be performed by a module or a component of the network device, for example, may be performed by a chip or a chip system in the network device. As shown in FIG. 7, the method may include the following steps.

S71. A cloud server determines one or more pieces of prior data information.

For example, the prior data information may include commercial frequency information of an operator, or terminal camping frequency statistics information, or commercial frequency information of an operator and terminal camping frequency statistics information. For example, the commercial frequency information of the operator may include a band supported by the operator and a frequency used by the operator on the band. The terminal camping frequency statistics information may include some or all frequencies of cells on which terminals served by the same operator have camped. For a specific implementation of determining the prior data information by the cloud server, refer to step S51 in FIG. 5. Details are not described herein again.

S72. The cloud server sends network data to a terminal. Correspondingly, the terminal receives the network data. The network data includes one or more pieces of prior data information.

In this example, the network data sent by the cloud server to the terminal includes one or more pieces of prior data information. For example, after collecting one or more pieces of prior data information, the cloud server may send the collected one or more pieces of prior data information to the terminal.

S73. The cloud server determines a frequency search range corresponding to each band according to the network data.

For example, after the cloud server receives one or more pieces of prior data information, the cloud server may determine a frequency search range corresponding to each band according to the one or more pieces of prior data information. For example, the cloud server may determine the frequency search range corresponding to each band according to the commercial frequency information of the operator, the cloud server may determine the frequency search range corresponding to each band according to the terminal camping frequency statistics information, or the cloud server may determine the frequency search range corresponding to each band according to the commercial frequency information of the operator and the terminal camping frequency statistics information. For manners of determining and storing the frequency search range corresponding to each band, refer to steps S52 and S53 in FIG. 5. Details are not described herein again.

In a possible implementation, the terminal may send a network data response message (for example, an acknowledgment message or a negative acknowledgment message) to the cloud server, to indicate whether the terminal has successfully received the network data. Correspondingly, the cloud server receives the network data response message. For example, after receiving the network data, the terminal may send an acknowledgment message to the cloud server, to indicate that the terminal has successfully received the network data.

So far, the terminal obtains and stores the frequency search range corresponding to each band.

In another possible implementation, the network data includes data information of one or more bands. In this case, with reference to the process shown in FIG. 7, the cloud server may determine data information of one or more bands, for example, obtain data information by interacting with the operator, or determine data information imported by an administrator. The cloud server may send the network data to the terminal after determining the data information of the one or more bands, and correspondingly, the terminal receives the network data, where the network data includes the data information of the one or more bands. The terminal may update a frequency search range corresponding to a corresponding band according to the data information of the one or more bands after receiving the network data.

For example, a frequency search range corresponding to the current band 40 is [2325 MHz, 2350 MHz]. The data information of the one or more bands received by the terminal includes band 40, frequency 1, and frequency 2, where a frequency corresponds to frequency 1 is 2324 MHz, and a frequency corresponds to frequency 2 is 2351 MHz. After the terminal updates the frequency search range corresponding to the corresponding band according to the data information of the one or more bands, the frequency search range corresponding to band 40 may be [2323 MHz, 2352 MHz].

S402. The terminal determines whether prior information is stored. If the terminal determines that prior information is stored, the terminal performs step S403. If the terminal determines that no prior information is stored, the terminal enters a band scanning stage, that is, the terminal performs step S405.

For example, the prior information may include at least one frequency, and the at least one frequency may be a frequency of a cell on which the terminal has camped. For example, the prior information may be frequency information (such as a frequency and a cell identifier) of a cell on which the terminal has camped before the terminal is powered off. Optionally, the prior information may further include a cell identifier.

For example, the terminal may determine whether prior information is stored. For example, the terminal may determine, by reading an internal memory, an SIM card, or a universal subscriber identity (USIM) card, whether prior information is stored. For example, when an SIM card or a USIM card is inserted into the terminal for the first time, the terminal may determine that no prior information is stored.

S403. The terminal searches for a suitable cell according to the prior information.

For example, the terminal may search for a suitable cell on the at least one frequency included in the prior information. For example, when the prior information includes one frequency, the terminal may directly search for a suitable cell on the frequency; or when the prior information includes a plurality of frequencies, the terminal may search for a suitable cell on the plurality of frequencies in sequence. For example, the plurality of frequencies include frequency 1, frequency 2, and frequency 3. The terminal may first search for a suitable cell on frequency 1, but does not find any suitable cell; the terminal searches for a suitable cell on frequency 2, but does not find any suitable cell; and the terminal searches for a suitable cell on frequency 3.

It should be noted that the suitable cell may be a cell which is found by the terminal and on which the terminal attempts to reside. For example, the terminal finds a plurality of cells on a band, and the suitable cell may be a cell that satisfies a predetermined criterion among the plurality of cells. The predetermined criterion may be any one of an S criterion, an R criterion, an H criterion, or the like. This is not limited in this embodiment of this application.

S404. The terminal determines whether a suitable cell is found according to the prior information. If the terminal determines that a suitable cell is found according to the prior information, the terminal performs step S407. If the terminal determines that no suitable cell is found according to the prior information, the terminal enters a band scanning stage, that is, the terminal performs step S405.

For example, if the terminal finds a suitable cell on the at least one frequency included in the prior information, the terminal may attempt to camp on the suitable cell, that is, perform step S407. If the terminal does not find a suitable cell on the at least one frequency included in the prior information, the terminal may perform band scanning, that is, the terminal performs step S405.

For example, if the terminal finds a suitable cell on the at least one band included in the prior information, but fails to camp on the suitable cell, the terminal enters a band scanning stage, that is, the terminal performs step S407. For example, after the terminal finds a suitable cell according to the prior information, the terminal is rejected to access the suitable cell in a process of attempting to camp on the suitable cell.

In the prior art, after failing to find a suitable cell from the prior information, the terminal scans full bands of the PLMN. In this embodiment of this application, the PLMN may indicate a frequency search range corresponding to each of one or more bands, and a quantity of frequencies in the frequency search range corresponding to each band is less than a quantity of all frequencies on each band. Therefore, scanning duration on each band can be reduced, and overall cell search duration can be shortened. Specifically, the terminal may obtain a frequency search range corresponding to each of one or more bands corresponding to the PLMN, that is, the terminal performs step S405.

S405. The terminal obtains one or more bands corresponding to the PLMN and a frequency search range corresponding to each of the one or more bands.

For example, a band and a frequency search range corresponding to the band are stored by using the PLMN as an index, so in a frequency scanning stage of cell search, the terminal may determine one or more bands corresponding to the PLMN and a customized frequency search range corresponding to each of the one or more bands according to the PLMN determined in step S401. For example, the terminal may query a PLMN list (as shown in Table 1) according to the PLMN, to obtain the one or more bands corresponding to the PLMN and the frequency search range corresponding to each of the one or more bands.

For ease of description, in the following, the PLMN determined in step S401 may be referred to as a first PLMN, the first PLMN corresponds to a first operator, the first PLMN corresponds to a first band, and the frequency search range corresponding to the first band is referred to as a first frequency search range.

In a possible implementation, the terminal may determine a second PLMN according to the first band, where the second PLMN corresponds to a second operator. The terminal may obtain one or more bands corresponding to the second PLMN, and a frequency search range corresponding to each of the one or more bands. The one or more bands corresponding to the second PLMN include a first band, and the frequency search range corresponding to the first band corresponding to the second PLMN is referred to as a second frequency search range. For example, the terminal may query a PLMN list (as shown in Table 1) according to the first band, to obtain the second PLMN and the second frequency search range. In this case, the terminal may search for a cell in a third frequency range, where the third frequency range includes the first frequency range and the second frequency range, and a quantity of frequencies included in the third frequency range is less than a quantity of all frequencies on the first band.

Optionally, the first operator and the second operator may be the same operator, or may be different operators. This is not limited in this embodiment of this application. Both the first operator and the second operator serve the terminal. For example, when the first frequency search range includes some frequencies used by the first operator on the first band, and the second frequency search range includes some frequencies used by the second operator on the first band, the first operator and the second operator may be the same operator. In this case, the first frequency search range or the second frequency search range may be understood as a frequency search range obtained by updating.

For example, the first operator and the second operator are different operators. According to protocol definitions, a frequency search range of band 41 is [2500 MHz, 2690 MHz] (denoted as frequency search range 1), where [2555 MHz, 2575 MHz] in band 41 is configured to operator 1, and [2575 MHz, 2635 MHz] in band 41 is configured to operator 2. The cloud server may tailor [2555 MHz, 2575 MHz] to [2560 MHz, 2570 MHz] (denoted as frequency search range 2) according to commercial frequency information of operator 1, and configure band 41 and frequency search range 2 to the terminal by using the PLMN 1 as an index. [2575 MHz, 2635 MHz] may be tailored to [2585 MHz, 2625 MHz] (denoted as frequency search range 3) according to commercial frequency information of operator 2, and band 41 and frequency search range 3 are configured to the terminal by using PLMN 2 as an index. When the terminal determines to scan band 41, the terminal may determine, according to PLMN 1 and PLMN 2, that customized frequency search ranges of band 41 are [2560 MHz, 2570 MHz] and [2585 MHz, 2625 MHz], and then search for a suitable cell in [2560 MHz, 2570 MHz] and [2585 MHz, 2625 MHz], as shown in FIG. 8.

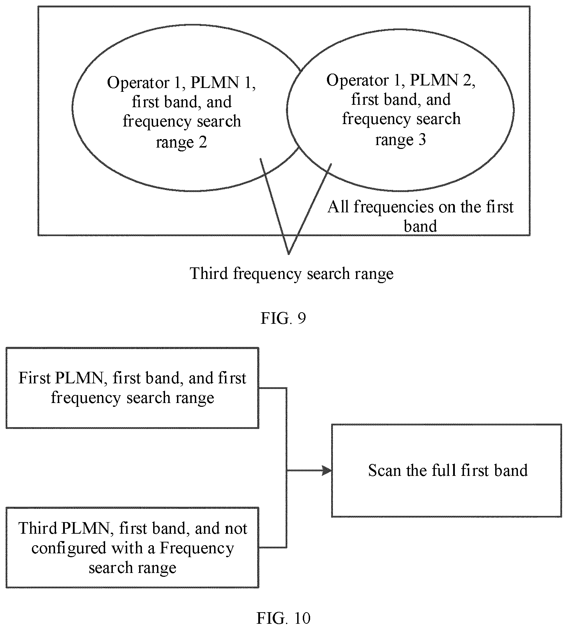

For example, the first operator and the second operator are the same operator. According to protocol definitions, a frequency search range of band 41 is [2500 MHz, 2690 MHz] (denoted as frequency search range 1), where [2555 MHz, 2575 MHz] in band 41 is configured to operator 1. The terminal locally stores PLMN 3 and a frequency search range [2557 MHz, 2568 MHz] (which may be denoted as frequency search range 4). The cloud server may tailor [2555 MHz, 2575 MHz] to [2564 MHz, 2573 MHz] (denoted as frequency search range 5) according to commercial frequency information of operator 1, and configure band 41 and frequency search range 5 to the terminal by using PLMN 4 as an index. When the terminal determines to scan band 41, the terminal may determine, according to PLMN 3 and PLMN 4, that a customized frequency search range of band 41 is [2557 MHz, 2573 MHz], and then search for a suitable cell in [2557 MHz, 2573 MHz], as shown in FIG. 9.

In another possible implementation, the terminal may determine a third PLMN according to the first band, where no frequency search range is configured for the third PLMN. For example, after the terminal determines to search for a suitable cell on the first band, the terminal may determine another PLMN corresponding to the first band according to the first band and a PLMN list (as shown in Table 1), to obtain the third PLMN and whether a frequency search range is configured for the third PLMN. A system of the terminal is not upgraded, but a network is upgraded, for example, a PLMN, a band, or a frequency is added, and no frequency search range has been configured for the third PLMN. In this case, the terminal searches for a cell on all frequencies on the first band (that is, a suitable cell shown on the full band), to avoid a risk of missing a suitable cell, as shown in FIG. 10.

S406. The terminal searches for a suitable cell according to the frequency search range corresponding to each band.

For example, the terminal may scan one or more bands. For example, when scanning one band, the terminal may scan frequencies with stronger signals in the frequency search range corresponding to the band to obtain a plurality of frequencies, and then the terminal sequentially searches for a suitable cell on the plurality of frequencies. For another example, when scanning plurality of bands, the terminal may sequentially scan a suitable cell in the frequency search range corresponding to each of the plurality of bands.

For example, bands scanned by the terminal are band 1, band 2, and band 3. The terminal may scan frequencies with stronger signals in a frequency search range corresponding to band 1, to obtain a plurality of frequencies. Then, the terminal sequentially searches for a suitable cell on the plurality of frequencies, and finds no suitable cell or fails to camp on a found suitable cell. Next, the terminal may scan frequencies with stronger signals in a frequency search range corresponding to band 2, to obtain a plurality of frequencies. Thereafter, the terminal sequentially searches for a suitable cell on the plurality of frequencies, finds a suitable cell, and successfully camps on the cell. So far, the cell search ends, that is, the terminal may not search for a frequency search range corresponding to band 3.

S407. The terminal camps on the suitable cell.

For example, after the terminal finds the suitable cell, the terminal may attempt to camp on the suitable cell. For example, the terminal may receive an SSB signal from the suitable cell to synchronize with the suitable cell in terms of time and frequency, receive broadcast information of the suitable cell, and perform network registration. After the registration succeeds, the terminal camps on the suitable cell.

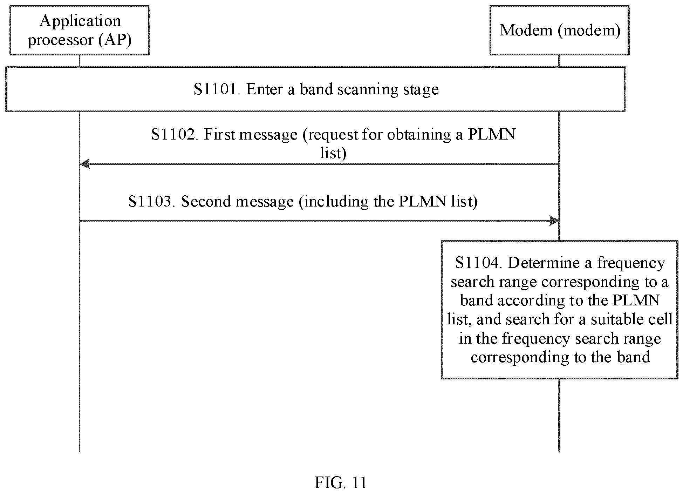

In a possible implementation, when the PLMN list is stored in the cloud communication module, the process shown in FIG. 4 may be implemented by interaction between the cloud communication module and the modem in the terminal, as shown in FIG. 11. FIG. 11 is another schematic flowchart of a cell search method applied to a terminal according to an embodiment of this application. The method may be performed by the terminal shown in FIG. 2. As shown in FIG. 11, the method may include the following steps.

S 1101. A terminal enters a band scanning stage.

For example, when an SIM card (or a USIM card) is inserted into the terminal for the first time, there is no prior information in the terminal. After the terminal is powered on, the terminal enters a band scanning stage. For example, after the terminal is powered on, if no suitable cell is found according to prior information, the terminal enters a band scanning stage. For another example, after the terminal is powered on, the terminal finds a suitable cell according to prior information, but fails to reside, and the terminal enters a band scanning stage. For example, in scenarios such as a tunnel, a garage, or insufficient network coverage in early SA construction, the terminal enters a band scanning stage at a relatively high probability.

S 1 102. A modem sends a first message to an application processor, and the application processor receives the first message.

The first message may be used for applying for obtaining a PLMN list (as shown in Table 1), or reading a PLMN list. For example, after the terminal enters the band scanning stage, the modem in the terminal may determine a PLMN, and send a first message to the application processor, to obtain permission to read a PLMN list. For example, the PLMN is stored in the cloud communication module of the application processor, and the modem may determine a PLMN, and directly send a first message to the cloud communication module, to obtain permission to read a PLMN list stored in the cloud communication module. For determination of the PLMN, refer to step S404 in FIG. 4. Details are not described herein again. It may be understood that interaction between the modem and the application processor (or the cloud communication module) may be implemented based on a protocol stack. This is not limited in this embodiment of this application.

S1103. The application processor sends a second message to the modem, and the modem receives the second message.

The second message may be a response message of the first message, and may be used for providing a PLMN list for the modem. For example, after receiving the first message of the modem, the application processor (or the cloud communication module) allows the modem to access the PLMN list, and an acknowledgment message is sent to the application processor (or the cloud communication module). For another example, after receiving the first message of the modem, the application processor (or the cloud communication module) does not allow the modem to access the PLMN list, and a negative acknowledgment message is sent to the application processor (or the cloud communication module).

S 1104. The modem determines a frequency search range corresponding to a band according to a PLMN list, and searches for a suitable cell in the frequency search range corresponding to the band.

For example, after obtaining the permission to access the PLMN list, the modem may determine a frequency search range corresponding to a band according to the PLMN list, and search for a suitable cell in the frequency search range corresponding to the band. For a specific implementation process, refer to steps S405 to S407 in FIG. 4. Details are not described herein again. For another example, if the modem does not obtain the permission to access the PLMN list, the modem scans all frequencies of the band.

In the foregoing embodiment of this application, the terminal searches for a suitable cell in a frequency search range corresponding to each of one or more bands corresponding to the PLMN, where a quantity of frequencies in the frequency search range corresponding to each band is less than a quantity of all frequencies on each band. That is, for a single band, the terminal scans some frequencies of the band. Compared with the prior art in which all frequencies of the band need to be scanned, duration of scanning a single band by the terminal can be reduced. When a plurality of bands need to be scanned, the foregoing technical solution can shorten overall duration of scanning the bands by the terminal, thereby reducing duration of searching for a cell by the terminal, and improving user experience.

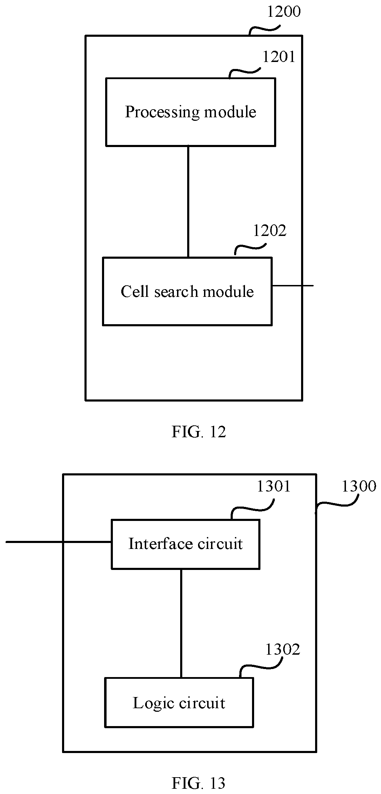

FIG. 12 is a schematic diagram of a structure of a communication apparatus 1200. The communication apparatus 1200 may be the terminal in embodiments shown in FIG. 4 to FIG. 11, and can implement functions of the terminal in the methods provided in embodiments of this application. Alternatively, the communication apparatus 1200 may be an apparatus that can support the terminal in implementing functions of the terminal in the methods provided in embodiments of this application. The communication apparatus 1200 may be a hardware structure, a software module, or a combination of a hardware structure and a software module. The communication apparatus 1200 may be implemented by a chip system. In this embodiment of this application, the chip system may include a chip, or may include a chip and another discrete component.

The communication apparatus 1200 may include a processing module 1201 and a cell search module 1202.

The processing module 1201 may be configured to obtain, on a band scanning stage of cell search, one or more bands corresponding to a public land mobile network PLMN and a frequency search range corresponding to each band in the one or more bands, where a quantity of frequencies in the frequency search range corresponding to each band is less than a quantity of all frequencies on each band.

The cell search module 1202 may be configured to search, according to the frequency search range corresponding to each band, whether there is a suitable cell, and attempt to camp on the found suitable cell, where the frequencies in the frequency search range corresponding to each band include some frequencies filtered based on one or more pieces of the following prior data information: commercial frequency information of an operator corresponding to the PLMN, and terminal camping frequency statistics information corresponding to the PLMN.

In a possible implementation, the frequency search range corresponding to each band is stored in the terminal by using the PLMN as an index.

In a possible implementation, the cell search module 1202 may be further configured to: receive network data from a cloud server, where the network data is used for initializing or updating the frequency search range corresponding to each band in the terminal.

In a possible implementation, the network data of the cloud server includes one or more of the following data information: data information of one or more bands corresponding to the PLMN, data information of a frequency search range corresponding to each of one or more bands, and one or more pieces of prior data information.

In a possible implementation, the one or more bands corresponding to the PLMN include a band of a new radio NR system.

The cell search module 1202 is used by the communication apparatus 1200 to communicate with another module, and may be a circuit, a component, an interface, a bus, a software module, a transceiver, a transceiver module, or any other apparatus that can implement communication.

All related content of the steps in the foregoing method embodiments may be cited in function descriptions of the corresponding function modules. Details are not described herein again.

It should be noted that the processing module may also be referred to as a processing unit, a processor, a processing apparatus, a single processing board, or the like, and the transceiver module may also be referred to as a communication module, a transceiver, a transceiver machine, a transceiver unit, a transceiver circuit, or the like. This is not limited in this embodiment of this application.

Division into the modules in embodiments of this application is an example, is merely division into logical functions, and may be other division during actual implementation. In addition, function modules in embodiments of this application may be integrated into one processor, or each of the modules may exist alone physically, or two or more modules may be integrated into one module. The integrated module may be implemented in a form of hardware, or may be implemented in a form of a software function module.

Some or all of the foregoing methods may be implemented by hardware or software. When implemented by hardware, as shown in FIG. 13, a communication apparatus 1300 includes: an interface circuit 1301, configured to implement a function implemented by the cell search module 1202; and a logic circuit 1302, configured to implement a function implemented by the processing module 1201.

Optionally, in a specific implementation, the communication apparatus may be a chip or an integrated circuit.

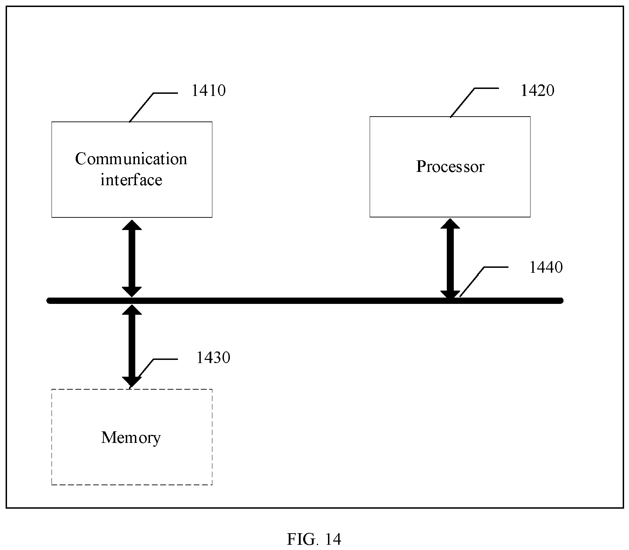

FIG. 14 shows a communication apparatus according to an embodiment of this application. The apparatus may be a terminal, or may be an apparatus in a terminal (for example, a chip, a chip system, a chip set, or a part in a chip for performing related method functions). The apparatus may be a chip system. In this embodiment of this application, the chip system may include a chip, or may include a chip and another discrete component. The apparatus 1400 includes at least one processor 1420, configured to implement functions of the terminal in the method provided in embodiments of this application. The apparatus 1400 may further include a communication interface 1410. In this embodiment of this application, the communication interface 1410 may be a transceiver, a circuit, a bus, a module, or a communication interface of another type, and is configured to communicate with another device through a transmission medium. For example, when a function of an encoding apparatus is implemented, the communication interface 1410 is used by an apparatus in the apparatus 1400 to communicate with another device. For example, the another device may be a network device or a cloud server. The processor 1420 receives and transmits data by using the communication interface 1410, and is configured to implement the method implemented by the terminal in the foregoing method embodiment.

The apparatus 1400 may further include at least one memory 1430, configured to store program instructions and/or data. The memory 1430 is coupled to the processor 1420. The coupling in this embodiment of this application may be an indirect coupling or a communication connection between apparatuses, units, or modules in an electrical form, a mechanical form, or another form, and is used for information exchange between the apparatuses, the units, or the modules. The processor 1420 may operate with the memory 1430 together. The processor 1420 may execute the program instructions stored in the memory 1430. At least one of the at least one memory may be included in the processor

A specific connection medium between the communication interface 1410, the processor 1420, and the memory 1430 is not limited in this embodiment of this application. In this embodiment of this application, in FIG. 14, the memory 1430, the processor 1420, and the communication interface 1410 are connected through a bus 1440. The bus is represented by a bold line in FIG. 14. A connection manner between other components is merely an example for description, and is not limited thereto. The bus may be classified into an address bus, a data bus, a control bus, and the like. For ease of representation, only one bold line is used to represent the bus in FIG. 14, but this does not mean that there is only one bus or only one type of bus.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor, any conventional processor, or the like. The steps of the method disclosed with reference to embodiments of this application may be directly performed by a hardware processor, or may be performed by using a combination of hardware in the processor and a software module.

In embodiments of this application, the memory may be a non-volatile memory, for example, a hard disk drive (HDD) or a solid-state drive (SSD), or may be a volatile memory such as a random-access memory (RAM). The memory is any other medium that can carry or store expected program code in a form of instructions or a data structure and that can be accessed by a computer, but is not limited thereto. The memory in embodiments of this application may alternatively be a circuit or any other apparatus that can implement a storage function, and is configured to store the program instructions and/or the data.

An embodiment of this application further provides a computer-readable storage medium, including instructions. When the instructions are run on a computer, the computer is enabled to perform the method performed by the terminal in the foregoing embodiments.

An embodiment of this application further provides a computer program product, including instructions. When the instructions are run on a computer, the computer is enabled to perform the method performed by the terminal in the foregoing embodiments.

An embodiment of this application provides a chip system. The chip system includes a processor and may further include a memory, and is configured to implement a function of the terminal in the foregoing methods. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computer-implemented processing. Therefore, the instructions executed on the computer or the another programmable device provide steps for implementing a specific function in one or more processes in the flowcharts and/or in one or more blocks in the block diagrams.

Although some preferred embodiments of this application have been described, a person skilled in the art can make changes and modifications to these embodiments once they learn the basic inventive concept. Therefore, the following claims are intended to be construed as to cover the preferred embodiments and all changes and modifications falling within the scope of this application.

Clearly, persons skilled in the art can make various modifications and variations to embodiments of this application without departing from the spirit and scope of embodiments of this application. This application is intended to cover these modifications and variations provided that they fall within the scope of protection defined by the following claims and their equivalent technologies.

## Claims

1. A cell search method applied to a terminal, comprising:
obtaining, on a band scanning stage of cell search, one or more bands corresponding to a public land mobile network, PLMN, and a frequency search range corresponding to each band in the one or more bands, wherein a quantity of frequencies in the frequency search range corresponding to each band is less than a quantity of all frequencies on each band; and
searching, according to the frequency search range corresponding to each band, and attempting to camp on a suitable cell, wherein the frequencies in the frequency search range corresponding to each band comprise some frequencies filtered based on one or more pieces of the following prior data information:
commercial frequency information of an operator corresponding to the PLMN, and statistics information of terminal camping frequency corresponding to the PLMN.

2. The method according to claim 1, wherein
the frequency search range corresponding to each band is stored in the terminal by using the PLMN as an index.

3. The method according to claim 1 or 2, further comprising:
receiving network data from a cloud server, wherein the network data is used for initializing or updating the frequency search range corresponding to each band in the terminal.

4. The method according to claim 3, wherein
the network data of the cloud server comprises one or more of the following data information:
data information of one or more bands corresponding to the PLMN, data information of a frequency search range corresponding to each of the one or more bands, and the one or more pieces of prior data information.

5. The method according to any one of claims 1 to 4, wherein
the one or more bands corresponding to the PLMN comprise a band of a new radio, NR, system.

6. A communication apparatus, wherein the communication apparatus comprises a processing module and a cell search module; and
the processing module is configured to obtain, on a band scanning stage of cell search, one or more bands corresponding to a public land mobile network, PLMN, and a frequency search range corresponding to each band in the one or more bands, wherein a quantity of frequencies in the frequency search range corresponding to each band is less than a quantity of all frequencies on each band; and
the cell search module is configured to search, according to the frequency search range corresponding to each band, and attempt to camp on a suitable cell, wherein the frequencies in the frequency search range corresponding to each band comprise some frequencies filtered based on one or more pieces of the following prior data information:
commercial frequency information of an operator corresponding to the PLMN, and statistics information of terminal camping frequency corresponding to the PLMN.

7. The communication apparatus according to claim 6, wherein
the frequency search range corresponding to each band is stored in the terminal by using the PLMN as an index.

8. The communication apparatus according to claim 6 or 7, wherein the cell search module is further configured to:
receive network data from a cloud server, wherein the network data is used for initializing or updating the frequency search range corresponding to each band in the terminal.

9. The communication apparatus according to claim 8, wherein
the network data of the cloud server comprises one or more of the following data information:
data information of one or more bands corresponding to the PLMN, data information of a frequency search range corresponding to each of the one or more bands, and the one or more pieces of prior data information.

10. The communication apparatus according to any one of claims 6 to 9, wherein
the one or more bands corresponding to the PLMN comprise a band of a new radio, NR, system.

11. A communication apparatus, comprising:
a logic circuit, configured to obtain one or more bands corresponding to a public land mobile network PLMN and a frequency search range corresponding to each of the one or more bands, enabling the communication apparatus to perform the method according to any one of claims 1 to 5, wherein a quantity of frequencies in the frequency search range corresponding to each band is less than a quantity of all frequencies on each band; and
an interface circuit, configured to search, according to the frequency search range corresponding to each band, and attempt to camp on a suitable cell, wherein the frequencies in the frequency search range corresponding to each band comprise some frequencies filtered based on one or more pieces of the following prior data information:
commercial frequency information of an operator corresponding to the PLMN, and statistics information of terminal camping frequency corresponding to the PLMN.

12. A communication apparatus, comprising:
a memory, configured to store a program; and
a processor, configured to execute the program stored in the memory, wherein when the program is executed, the communication apparatus is enabled to perform the method according to any one of claims 1 to 5.

13. The apparatus according to claim 12, wherein the processor comprises the memory.

14. The apparatus according to claim 12 or 13, wherein the communication apparatus is a chip or an integrated circuit.

15. A computer-readable storage medium, wherein the computer-readable storage medium stores computer-readable instructions, and when the computer-readable instructions are run on a communication apparatus, the communication apparatus is enabled to perform the method according to any one of claims 1 to 5.

16. A computer program product, wherein when the computer program product runs on a communication apparatus, the communication apparatus is enabled to perform the method according to any one of claims 1 to 5.
